# EUROPÄISCHE PATENTSCHRIFT

(11) **EP 1 405 037 B1**
(45) Veröffentlichungstag und Bekanntmachung des Hinweises auf die Patenterteilung: **06.07.2011**
(21) Anmeldenummer: 02732409.4
(22) Anmeldetag: 27.04.2002
(51) Int. Cl.: G01C 3/02, G01B 11/00, G01B 11/30

(54) **VORRICHTUNG ZUR OPTISCHEN DISTANZMESSUNG ÜBER EINEN GROSSEN MESSBEREICH**
DEVICE FOR OPTICAL MEASUREMENT OF DISTANCE OVER A LARGE MEASURING RANGE
DISPOSITIF DE MESURE OPTIQUE DE DISTANCE SUR UNE PLAGE DE MESURE ETENDUE

(30) Priorität: 26.06.2001 DE 10130763
(43) Veröffentlichungstag der Anmeldung: 07.04.2004
(73) Patentinhaber: ROBERT BOSCH GMBH, 70442 Stuttgart (DE)
(72) Erfinder: SCHMIDT, Dierk, 71063 Sindelfingen (DE); STIERLE, Joerg, 71111 Waldenbuch (DE); WOLF, Peter, 70771 Leinfelden-Echterdingen (DE); FLINSPACH, Gunter, 71229 Leonberg (DE)
(86) Internationale Anmeldenummer: PCT/DE2002/001553
(87) Internationale Veröffentlichungsnummer: WO 2003/002939

(56) Entgegenhaltungen:
- WO-A-01/36923
- US-A- 4 105 332
- US-B1- 6 226 076

## Beschreibung

Die Erfindung geht aus von einer Vorrichtung zur optischen Distanzmessung nach dem Oberbegriff des unabhängigen Anspruchs.

Optische Entfernungsmessgeräte als solche sind seit geraumer Zeit bekannt und werden inzwischen auch kommerziell vertrieben. Diese Geräte senden einen modulierten Lichtstrahl aus, der auf die Oberfläche eines gewünschten Zielobjektes, dessen Abstand zum Gerät zu ermitteln ist, ausgerichtet wird. Das von der angepeilten Zielfläche reflektierte oder gestreute Licht wird von dem Gerät teilweise wieder detektiert und zur Ermittlung des gesuchten Abstandes verwendet.

Der Anwendungsbereich derartiger Entfernungsmessgeräte umfasst im Allgemeinen Entfernungen im Bereich von einigen Zentimetern bis zu mehreren hundert Metern.

In Abhängigkeit von den zu messenden Laufstrecken und der Rückstrahlfähigkeit des Zielobjektes ergeben sich unterschiedliche Anforderungen an die Lichtquelle, die Qualität des Messstrahls und an den Detektor.

Die aus dem Stand der Technik bekannten optischen Entfernungsmessgeräte lassen sich grundsätzlich entsprechend der Anordnung, des im Gerät notwendigerweise vorhandenen Sende- und Empfangskanals in zwei Kategorien einteilen. Zum Einen gibt es Vorrichtungen, bei denen der Sendekanal in einem gewissen Abstand zu dem Empfangskanal angeordnet ist, so dass die jeweiligen optischen Achsen parallel zueinander verlaufen. Zum Anderen gibt es monoaxiale Messvorrichtungen, bei denen der Empfangskanal koaxial zum Sendekanal verläuft. Die biaxialen Messsysteme haben den Vorteil, dass es einer aufwendigen Strahlungsteilung zur Selektion des rücklaufenden Messsignals nicht bedarf, so dass beispielsweise auch ein optisches Übersprechen aus dem Sendekanal direkt in den Empfangskanal besser unterdrückt werden kann.

Andererseits besteht bei biaxialen Entfernungsmessgeräten unter Anderem der Nachteil, dass es für den Bereich kurzer Messentfernungen aufgrund einer Parallaxe zu Detektionsproblemen kommen kann:

Die Abbildung des Zielobjektes auf die Detektoroberfläche des im Gerät integrierten Messempfängers, die für große Zielentfernungen noch eindeutig auf dem Detektor liegt, wandert mit kürzer werdender Messentfernung zunehmend von der optischen Achse des Empfangsastes weg und erfährt zudem eine Variation des Strahlquerschnittes in der Detektorebene.

Dies bedingt, dass ohne weitere Maßnahmen am Gerät, im Nahbereich der Detektion, das heisst für einen kleinen Abstand zwischen Zielobjekt und Messgerät, das Messsignal gegen Null gehen kann.

Aus der DE 43 16 348 A1 ist eine Vorrichtung zur Distanzmessung mit einem von einem Halbleiterlaser erzeugten sichtbaren Messstrahlenbündel bekannt, deren Empfangseinrichtung einen Lichtleiter mit nachgeschaltetem opto-elektronischen Wandler enthält. Die Lichteintrittsfläche in die Faser des Lichtleiters ist in der Abbildungsebene der Empfangsobjektives dieses Gerätes für große Objektentfernungen angeordnet und aus dieser Position quer zur optischen Achse verschiebbar.

Auf diese Weise ist es in der Vorrichtung der DE 43 16 348 A1 möglich, die bei kurzen Objektdistanzen zunehmend schräger in das Empfangsobjektiv einfallenden Messstrahlen über die Nachführung der optischen Faser bei räumlich nicht veränderbarem Detektor auf die lichtempfindlichen Oberfläche des Detektors zu leiten.

Die notwendige elektronische Ansteuerung der Nachführung und die Verwendung von zusätzlichen und insbesondere auch beweglichen Teilen in dem offenbarten Entfernungsmessgerät der DE 43 16 348 A1 bedeuten einen nicht unerheblichen Aufwand, der die Komplexität und damit die Kosten und die Anfälligkeit eines derartigen Systems erhöht.

Alternativerweise schlägt die DE 43 16 348 A1 zur Lösung des Parallaxenproblems biaxialer Messgeräte vor, die Lichtleitereintrittsfläche feststehend anzuordnen und durch optische Umlenkmittel im Randbereich des Empfangsobjektives dafür zu sorgen, dass die Messlichtstrahlen auch bei kürzer werdendem Objektabstand noch auf den Detektor fallen können. Unter Anderem wird vorgeschlagen, dazu einen Umlenkspiegel zu verwenden, der die aus kurzer Objektentfernung in das Messgerät eintretenden Messstrahlen auf den Detektor umlenkt. Zur Lösung der gleichen Aufgabe wird in derselben Schrift auch die Verwendung eines Prismas, das in den Randbereich der Empfangslinse eingebracht ist, vorgeschlagen.

Als nachteilig bei dieser Lösung des Problems müssen die notwendigen zusätzlichen Komponenten ansehen werden. Ferner ist eine negative Wechselwirkung dieser zusätzlichen Komponenten mit dem Strahlengang der Messstrahlen aus großer Entfernung nicht immer auszuschließen, so dass es auch aus diesem Grunde zu Signalbeeinträchtigungen kommen kann, die den nutzbaren Meßbereich des Entfernungsmessgerätes einschränken.

### Vorteile der Erfindung

Die erfinderische Vorrichtung zur optischen Distanzmessung mit den Merkmalen des unabhängigen Anspruchs hat demgegenüber den Vorteil, auf zusätzliche optische Elemente zur Korrektur des Parallaxenproblems verzichten zu können und trotzdem auch für den Nahbereich genügend Messsignal auf dem Detektor zu ermöglichen.

Dabei wird die Form der lichtempfindlichen, aktiven Fläche des erfindungsgemäßen Detektors so gewählt, dass auch im Nahbereich ein Signal ausreichende Amplitude auf der Detektoroberfläche vorliegt.

Damit ist eine Erweiterung des für dieses Messgerät zugänglichen Messbereichs auf einfache und zuverlässige Weise möglich

Gegenüber den aus dem Stand der Technik bekannten Vorrichtungen zur optischen Distanzmessung hat die erfindungsgemäße Vorrichtung den Vorteil, dass die von der optischen Strahlung zurückgelegte Wegstrecke nicht durch die Mittel zur Behebung des Parallaxenproblems beeinflusst wird, so dass diese keine negativen Auswirkungen auf die Entfernungsmessung nach sich ziehen.

Desweiteren ist keine Justage von zusätzlichen, insbesondere beweglichen Komponenten im Messgerät notwendig.

Vorteilhafte Ausführungen der erfindungsgemäßen Vorrichtung ergeben sich aus den in den Unteransprüchen aufgeführten Merkmalen.

Vorteilhafterweise wird die Größe der lichtempfindlichen Fläche des Detektors der Empfangseinheit so groß gewählt, dass noch genügend Signal auch im Nahbereich auf den Detektor fällt. Dadurch, dass der vom Zielobjekt rücklaufende Messstrahl für einen kleiner werdenden Objektabstand in der gemeinsamen Ebene der optischen Achse der Sendeeinheit und der optischen Achse der Empfangseinheit lateral auswandert, wird der Detektor vorteilhafterweise eine in dieser Richtung elongierte Form annehmen. Auf diese Weise wird der Abhängigkeit der Richtung des rücklaufenden Messsignals von der Entfernung des Messgerätes zum Zielobjekt durch die konkrete erfindungsgemäße Form der wirksamen, aktiven Detektorfläche Rechnung getragen.

Die erfindungsgemäße Form der wirksamen Detektorfläche ermöglicht es darüber hinaus, auch der Abhängigkeit der Stärke des rücklaufenden Messsignals von der Entfernung des Messgerätes zum Zielobjekt Rechnung zu tragen. Aufgrund des zugrundeliegenden Abstandsquadratgesetzes für die Änderung der Intenstiät in Abhängigkeit von der zurückgelegten Laufstrecke ist das rücklaufende Messsignal für den Nahbereich deutlich größer als für Zielobjekte, die sich weit entfernt vom Messgerät befinden.

Die Ausdehnung der wirksamen Detektorfläche senkrecht zur gemeinsamen Ebene der optischen Achsen von Sende- und Empfangseinheit kann daher in dem Maße abnehmen, wie das Lichtsignal aufgrund der kürzeren Laufstrecke im Nahbereich zunimmt. Dies hat den Vorteil, dass aufgrund der Ausdehnung des Detektors zwar noch genügend Licht aus dem Nahbereich auf den Detektor fällt, dass aber der Detektor aufgrund seiner in dieser Richtung kleiner werdenden aktiven, lichtempfindlichen Fläche nicht durch das Licht aus dem Nahbereich übersteuert werden kann. Ein Verschieben des Detektors aus dem Fokus der Empfangslinse entlang der optischen Empfangsachse zur Anpassung der auf den Detektor fallenden Signalstärke, ist somit in der erfindungsgemäßen Vorrichtung nicht mehr nötig.

Die erfindungsgemäße Ausführung der Detektionsfläche hat somit auch den Vorteil, dass das Verhältnis von Nutzlicht zu Fremdlicht deutlich verbessert wird, so dass auch aus diesem Grunde die Messgenauigkeit des Gerätes im unmittelbaren Nahbereich erhöht und damit der Meßbereich des Gerätes erweitert wird.

Bei der Größe der Fläche des Detektors muss nur sichergestellt sein, dass die wirksame Fläche in dem Bereich des Detektors, in dem Licht von weit entfernten Zielobjekten auf die Detektoroberfläche auftrifft, groß genug ist, um möglichst dass gesamte Signal zu detektieren. Dies ist ebenfalls eine Konsequenz aus dem Abstandsquadrat-Gesetzes, dem die detektierte Intensität unterliegt, und zu einem relativ schwachen Detektionssignal für weit entfernte Messobjekte führt.

Die laterale Ausdehnung des Detektors muss entsprechend so groß sein, dass noch genügend Licht aus dem unmittelbaren Nahbereich der Detektion auf die Detektionsfläche gelangt. Aufgrund des hohen Signalpegels, welches sich aufgrund der kurzen Wegstrecke im Nahbereichs ergibt, ist es in diesem Fall nicht notwendig, die volle Signalstärke zu detektieren.

Ein weiterer Vorteil der beanspruchten Vorrichtung ist der, dass die elektrisch-kapazitiven Eigenschaften des Detektors des Messgerätes aufgrund der erfindungsgemäßen Form eines Ausführungsbeispiels der aktiven Detektionsfläche positiv beeinflusst werden. Eine zu große Detektoroberfläche würde die elektrische Kapazität des Detektors erhöhen, so dass die zeitliche Ansprechcharakteristik, beziehungsweise - äqivalent dazu - der Frequenzgang des Messsystems nicht mehr den benötigten Erfordernissen der Zeit- beziehungsweise Frequenzauflösung des Messsystems entsprechen würde.

In einer vorteilhaften Ausführung der erfindungsgemäßen Vorrichtung ist die Fläche des verwendeten Detektors daher genau so groß, wie es die oben skizzierten Randbedingungen erfordern.

Eine einfache und preiswerte Ausgestaltung der erfindungsgemäßen Vorrichtung mit der beanspruchten Detektionsfläche ergibt sich, wenn die wirksame, d.h. lichtempfindliche Detektionsfläche durch teilweise Abdeckung einer ursprünglich größeren Detektorfläche ausgebildet wird. Dazu kann beispielsweise ein großer Flächendetektor eine lichtundurchlässige Schicht in den Bereichen erhalten, die zur Detektion nicht genutzt werden sollen, so dass lediglich die beanspruchte Form als wirksame, aktive Detektorfläche genutzt werden kann. Die lichtundurchlässigen Bereiche lassen sich je nach verwendeter Wellenlänge des Messsignals und entsprechend gewähltem Detektor beispielsweise durch Aufdampfen oder Lackieren einer Schicht auf der Detektoroberfläche erzeugen. Auch mit einer einfachen mechanischen Maske oder Blende ließe sich in einfacher Weise die beanspruchte Form für die aktive Fläche des Detektors realisieren.

In vorteilhafter Weise lässt sich die erfindungsgemäße Vorrichtung zur optischen Distanzmessung durch die Verwendung eines Lasers als Lichtquelle realisieren. Laser und im speziellen Laserdioden sind über den gesamten sichtbaren Spektralbereich der elektromagnetischen Wellen erhältlich. Im Besonderen eignen sich Laserdioden wegen ihrer kompakten Größe und mittlerweile auch hohen Ausgangsleistungen für die Verwendung in Abstandsmessgeräten der beanspruchten Form.

Die partiell angebrachte, optisch undurchsichtige Schicht auf der Detektorfläche kann für diesem Fall beispielsweise eine aufgedämpfte Metalllage sein, die den verwendeten Halbleiterdetektor an den gewünschten Stellen optisch deaktiviert.

### Zeichnung

Weitere Vorteile ergeben sich aus der folgenden Beschreibung. In der Zeichnung sind Ausführungsbeispiele der erfindungsgemäßen Vorrichtung dargestellt. Die Beschreibung, die Zeichnungen und die Ansprüche enthalten zahlreiche Merkmale in Kombination. Ein Fachmann wird diese Merkmale auch einzeln betrachten und zu sinnvollen weiteren Kombinationen zusammenfassen.

Es zeigen:
Figur 1 die schematische Aufsicht auf ein Ausführungsbeispiel des erfindungsgemäßen Messgerätes,
Figur 2 eine Aufsicht auf die erfindungsgemäße Detektoroberfläche mit eingezeichneten Messstrahlenbündeln bei unterschiedlichen Entfernungen des Messgerätes zum Messobjekt,
Figur 3 die erfindungsgemäße Detektoroberfläche aus Figur 2 in einer Einzeldarstellung,
Figur 4 ein alternatives Ausführungsbeispiel der erfindungsgemäßen aktiven Detektionsfläche,
Figur 5 ein weiteres Ausführungsbeispiel der erfindungsgemäßen aktiven Detektionsfläche
und
Figur 6 die Aufsicht auf ein Ausführungsbeispiel einer erfindungsgemäßen Detektorfläche,

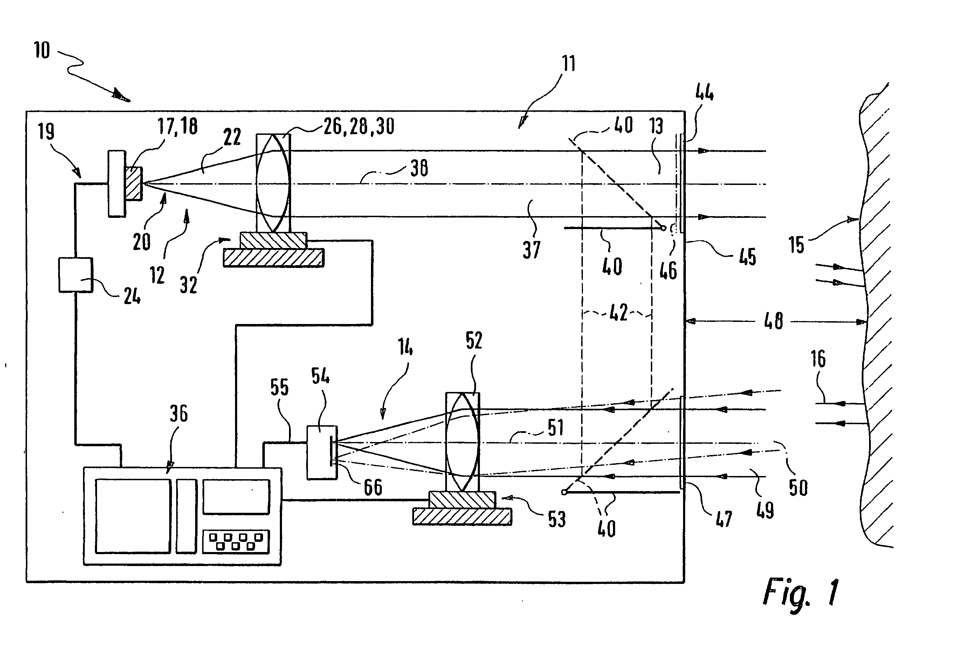

In der Figur 1 ist in schematischer Weise ein erfindungsgemäßes Entfernungsmessgerät mit den wichtigsten Komponenten zur Beschreibung seiner Funktion dargestellt.

Das erfindungsgemäße Gerät 10 weist ein Gehäuse 11 auf, in dem eine Sendeeinrichtung 12 zur Erzeugung eines Messsignals 13 sowie eine Empfangseinrichtung 14 zur Detektion des von einem Zielobjekt 15 rücklaufenden Messsignals 16 untergebracht sind.

Die Sendeeinrichtung 12 beinhaltet eine Lichtquelle 17, die im Ausführungsbeispiel der Figur 1 durch eine Halbleiterlaserdiode 18 realisiert ist. Die Verwendung anderer Lichtquellen in der erfindungsgemäßen Vorrichtung ist ebenso möglich. Die Laserdiode 18 sendet einen Laserstrahl 20 in Form eines für das menschliche Auge sichtbaren Lichtbündels 22 aus.

Die Laserdiode 18 wird über ein Steuergerät 24 betrieben, das durch eine entsprechende Elektronik eine Modulation des elektrischen Eingangssignals 19 der Diode 18 erzeugt. Durch eine derartige Modulation des Diodenstroms lässt sich erreichen, dass das optische Messsignal 13 zur Entfernungsbestimmung ebenfalls in gewünschter Weise moduliert ist.

Das Laserstrahlbündel 20 durchläuft anschließend eine Kollimationsoptik 26, in Form eines Objektivs 28, das in der Figur 1 in Form einer einzelnen Linse 30 dargestellt ist. Das Objektiv 28 befindet sich in diesem Ausführungsbeispiel optional auf einer Verstellmimik 32, die prinzipiell eine Änderung der Position des Objektivs in allen drei Raumrichtungen beispielsweise zu Justagezwecken ermöglicht.

Nach Durchlaufen des Objektivs 28 ergibt sich beispielsweise ein amplitudenmoduliertes Messsignal 13 in Form eines parallelen Lichtbündels 37, dass sich entlang der optischen Achse 38 der Sendeeinheit 12 ausbreitet, wie es in Figur 1 schematisch dargestellt ist.

Im Sendeast 12 der erfindungsgemäßen Vorrichtung befindet sich zudem noch eine vorzugsweise schaltbare Strahlumlenkung 40, die es gestattet, das Messsignal 13 unter Umgehung eines Zielobjektes direkt auf die Empfangseinheit 14 des Geräts 10 umzulenken. Auf diese Weise ist es möglich, eine geräteinterne Referenzstrecke 42 zu erzeugen, die eine Kalibrierung des Messsystems gestattet.

Soll eine Messung durchgeführt werden, so verlässt der Messstrahl 13 das Gehäuse 11 der erfindungsgemäßen Vorrichtung durch ein optisches Fenster 44 in der Stirnwand 45 des Gerätes 10. Die Öffnung des optischen Fensters kann durch einen Shutter 46 gesichert werden.

Zur Messung wird das Messgerät 10 auf ein Zielobjekt 15 ausgerichtet, dessen Entfernung 48 zum Messgerät ermittelt werden soll. Das an dem gewünschten Zielobjekt 15 reflektierte oder auch gestreute Signal 16 bildet ein rücklaufende Messstrahlbündel 49,50, das zu einem gewissen Teil wieder in das Messgerät 10 zurück gelangt.

Durch ein Eintrittsfenster 47 in der Stirnseite 45 des Gerätes 10 wird die rücklaufende Messstrahlung 16 in das Messgerät eingekoppelt und im Ausführungsbeispiel der Figur 1 auf eine Empfangsoptik 52 gelenkt.

In Figur 1 sind exemplarisch zwei rücklaufende Messstrahlbündel 49 beziehungsweise 50 für zwei unterschiedliche Zielobjektabstände 48 eingezeichnet. Für große Objektabstände, und groß heisst in diesem Fall groß gegenüber der Brennweite der Empfangsoptik, fällt das vom Zielobjekt rücklaufende Signal 16 parallel zur optischen Achse 51 der Empfangseinrichtung 14 ein. Dieser Fall ist im Ausführungsbeispiel der Figur 1 durch das Messstrahlenbündel 49 repräsentiert. Mit kleiner werdendem Objektabstand wird das in das Messgerät einfallende, rücklaufende Signal 16 aufgrund einer Parallaxe immer mehr gegenüber der optischen Achse 51 der Empfangseinheit 14 geneigt. Als Beispiel eines rücklaufenden Messstrahlenbündels aus dem Nahbereich des Entfernungsmessgerätes ist in Figur 1 das Strahlenbündel 50 eingezeichnet.

Die Empfangsoptik 52, die im Ausführungsbeispiel der Figur 1 ebenfalls durch eine einzelne Linse symbolisiert ist, kollimiert das rücklaufende Messsignals 16 und fokussiert dessen Strahlenbündel 49,50 auf einen Empfangsdetektor 54, der als PIN-Diode oder CCD-Chip oder auch als ein anderer, dem Fachmann bekannter Flächendetektor ausgebildet sein kann. Der Flächendetektor ist in den Regel mit seiner aktiven, lichtempfindlichen Oberfläche senkrecht auf die optische Achse des Empfangsastes ausgerichtet. Das einfallende optische Signal wird durch den Empfangsdetektor 54 in ein elektrisches Signal 55 umwandelt, und der weiteren Auswertung in Auswerteeinheit 36 zugeführt.

Die Empfangsoptik 52, die im Ausführungsbeispiel der Figur 1 auf einer Verstellmimik 53 angebracht ist, befindet sich ungefähr im Abstand ihrer Brennweite von der aktiven Fläche des Detektors entfernt, so dass einfallende Strahlung, die von einem Zielobjekt kommt, welches weit entfernt vom Messgerät liegt, genau auf den Detektor fokussiert wird. Für kleine Anstände zum Zielobjekt ist jedoch zu beobachten, dass die Abbildungsposition für den am Zielobjekt reflektierten oder gestreuten Messfleck sich zunehmend vom Fokus der Empfangslinse entfernt. So wandert der fokussierte rücklaufende Messstrahl mit kleiner werdendem Abstand des Zielobjektes zum Messgerät immer weiter von der optischen Achse der Empfangseinrichtung weg und weicht somit auch immer mehr von der optischen Achse der Sendeeinrichtung ab. Zudem wird das rücklaufende Messstrahlenbündel aufgrund der geänderten Abbildungsverhältnisse am Empfangsobjektiv nicht mehr genau auf die Detektorfläche fokussiert. Mit kürzer werdendem Zielobjektabstand ergibt sich ein immer größer werdenden Messfleck auf der Detektoroberfläche.

Auf weitere im Messgerät vorhandene Komponenten, die aber für das Verständnis der erfindungsgemäßen Vorrichtung nicht unbedingt notwendig sind, soll in diesem Zusammenhang nicht weiter eingegangen werden. Es sei nur angemerkt, dass das Messgerät natürlich auch über eine Steuer- und Auswerteeinheit 36 verfügt.

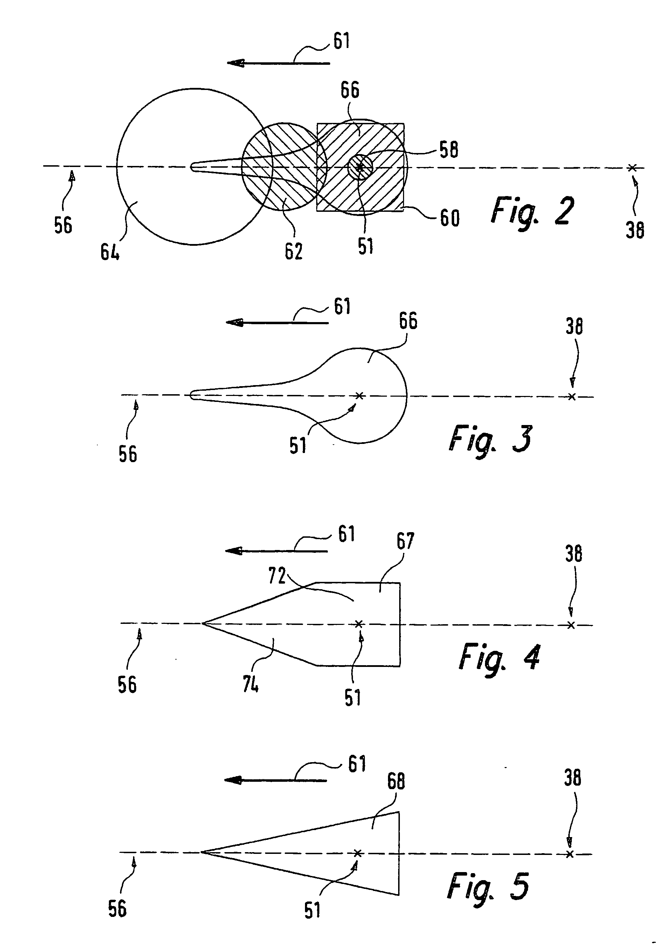

Die Zusammenhänge zwischen dem Abstand des Zielobjektes vom Messgerät und der Position beziehungsweise der Größe des Messflecks auf der Detektoroberfläche ist in schematischer Weise in Figur 2 nochmals zur Übersicht dargestellt.

Figur 2 zeigt eine Aufsicht auf die Detektoroberfläche in Blickrichtung des vom Messobjekt rücklaufenden Messsignals 16. Die Position 56 bezeichnet dabei die gemeinsame Ebene der optischen Achse 38 der Sendeeinheit 12 mit der optischen Achse 51 der Empfangseinheit 14. Der Messfleck 58 der rücklaufenden Strahlung 16 für sehr große Objektabstände 48 liegt auf der optischen Achse der Empfangseinheit 14 und wird auf der Oberfläche 66 des Detektors 54 zu einem kleinem Brennfleck fokussiert. Da der Detektor 54 in etwa im Abstand der Brennweite der Empfangsoptik 52 steht, wird Licht, dass optisch gesehen aus dem Unendlichen kommt, aufgrund der optischen Abbildungsgesetze direkt auf die Detektoroberfläche fokussiert.

Mit abnehmender Distanz 48 des Messgerätes 10 vom Zielobjekt 15 fällt das rücklaufende Signal 16 zunehmend schräger auf das Empfangsobjektiv 52 ein, so dass auch der Messfleck auf der Detektoroberfläche in Richtung des Pfeils 61 in Figur 2 wandert.

Der in Figur 2 ebenfalls eingezeichnete Messfleck 62 für einen kleinen Objektabstand 48 des Zielobjektes 15 vom Messgerät 10 ist somit von der optischen Achse 51 der Empfangseinrichtung weggewandert und in seiner Ausdehnung deutlich vergrößert. Bei sehr kleinem Messabstand 48 des Messobjektes 15 zum Messgerät 10 ergibt sich auf der Detektoroberfläche ein Messfleck 64 des rücklaufenden Messsignals 16 der nochmals deutlich vergrößert ist und auch weiter entfernt von der optischen Achse 51 der Empfangseinheit 14 auf der Detektorfläche zu liegen kommt.

Diese Verschiebung des Messflecks mit dem relativen Abstand 48 des Messobjektes 15 zum Messgerät 10 kann dazu führen, dass für sehr kleine Objektabstände das rücklaufende Signal 16 nicht mehr auf die aktive Fläche des Messempfängers 54 fällt, wie dies durch eine angedeutete, gestrichelt eingezeichnete Fläche 60 in Figur 2 angedeutet ist, die die Oberfläche eines herkömmlichen Messempfängers des Standes der Technik symbolisieren soll.

Um der Variation in der Größe und Lage des Messflecks in der Detektionsebene der Empfangseinheit 14 Rechnung zu tragen, ist die aktive, lichtempfindliche Oberfläche 66 des erfindungsgemäßen Detektors 54 entsprechend gestaltet. Im Bereich der optischen Achse 51 der Empfangseinheit 14 sollte die Detektorfläche 66 zumindest so groß sein, dass der gesamte Messfleck 58 aus dem Fernbereich, das heisst für sehr große Zielobjektabstände 48, vollständig auf die aktive Detektorfläche 66 fällt.

Die aktive Fläche 66 des Detektors 54 verjüngt sich im Ausführungsbeispiel der Figur 2 zunehmend in Richtung 61 der Strahlverschiebung, die sich aufgrund einer Parallaxe der rücklaufenden Strahlung 16 für kleiner werdende Zielobjektabstände 48 ergibt. Dabei ist die Detektorfläche 66 in lateraler Ausdehnung so groß, dass auch noch für den Fall sehr kleiner Abstände 48 des Zielobjektes 15 zum Messgerät 10 genügend Messsignal auf den Detektor 54 fällt. Aufgrund des hohen Signalpegels, des rücklaufenden Messsignals aus dem Nahbereich muss nicht der gesamte Messfleck auf der aktiven Detektorfläche zu liegen kommen.

Figur 3 zeigt noch einmal die erfindungsgemäße Detektionsfläche 66 gemäß Figur 2 der Übersicht halber einzeln herausgezeichnet.

In den Figuren 4 und 5 sind weitere Ausführungsbeispiele einer aktiven, lichtempfindlichen Oberfläche des erfindungsgemäßen Detektors 54 angegeben, die den zugrundeliegenden Erfindungsgedanken weiter illustrieren sollen, nicht aber als Beschränkung der beanspruchten Vorrichtung angesehen werden dürfen. In den Figuren 4 und 5 bezeichnet die Position 56 jeweils die gemeinsame Ebene der optischen Achse 38 der Sendeeinheit 12 mit der optischen Achse 51 der Empfangseinheit 14. Die Stelle 38 markiert die Lage der optischen Achse der Sendeeinheit 12, und die Stelle 51 die entsprechende Lage der optischen Achse der Empfangseinheit 14.

Das Ausführungsbeispiel der Figur 4 zeigt eine Oberfläche 67 eines erfindungsgemäßen Detektors 54, die einen ersten Bereich 72 aufweist, in dem die Größe der lichtempfindlichem Fläche in Richtung 61 der Strahlverschiebung aufgrund der Parallaxe des rücklaufenden Messsignals 16 konstant ist und einen zweiten, sich direkt daran anschließenden Bereich 74 der Oberfläche 67, in dem die Größe der Detektorfläche 67 in Richtung 61 dieser Strahlverschiebung kontinuierlich abnimmt.

Die Figur 5 offenbart die lichtempfindlichen Oberfläche 68 eines Detektors 54, die kontinuierlich und gleichmässig in Richtung 61 der parallaxenbedingten Strahlverschiebung abnimmt, und somit die Form eines Dreiecks annimmt. Selbstverständlich kann der erfindungsgemäße Detektor 54 auch eine Trapezform haben, die mit zunehmender Entfernung von der optischen Achse der Sendeeinheit schmaler wird, beziehungsweise kann im Auführungsbeispiel der Figur 4, die Verjüngung der Detektorfläche auch durch eine diskrete Stufe erzeugt werden.

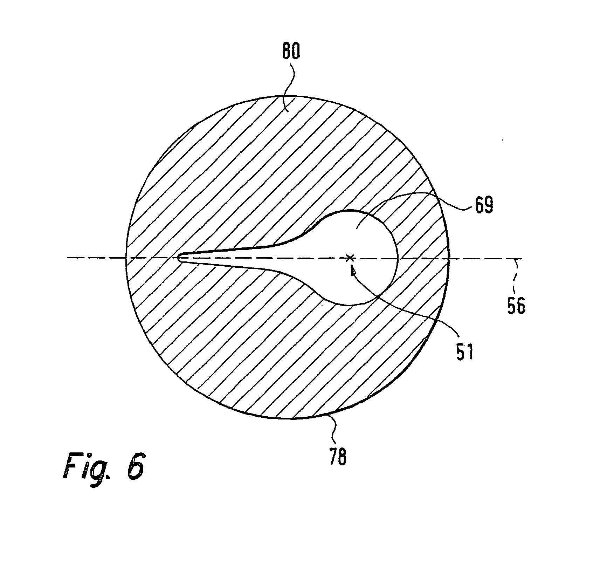

Figur 6 zeigt eine Möglichkeit zur Realisierung eines Ausführungsbeispiels des erfindungsgemäßen Detektors 54. Während in den Ausführungsbeipielen der Figuren 2 bis 5 die wirksame,d.h. lichtempfindliche Oberfläche 66,67,68 des Detektors 54 gleich der gesamten Detektorfläche ist, wird in dem Ausführungsbeispiel der Figur 6 die aktive, d.h. wirksam lichtempfindliche Detektionsfläche 69 aus einer ursprünglich größeren Detektorfläche 78 abgeleitet. Dazu wird die optisch sensitive Fläche 78 eines Halbleiterdetektors mit beispielsweise einer kreisrunden Detektionsfläche in gewissen Bereichen mit einer optisch undurchlässigen Schicht 80 überzogen, womit der Halbleiterdetektor in diesen beschichteten Bereichen deaktiviert ist, so dass nur noch eine nichtbeschichtete Teilfläche 69 des Halbleiterdetektors als lichtempfindlich verbleibt. Dieser aktiven Teilfläche 69 lässt sich im Herstellungsverfahren jede gewünschte Form geben, darunter auch die Formen, der in den Figuren 2 bis 5 aufgezeigten Detektorflächen 66,67 und 68. Zur Erzeugung dieser lichtundurchlässigen Schicht kann beispielsweise das Aufdampfen einer Metallschicht auf die gewünschten Stellen der ursprünglichen Detektionsfläche genutzt werden. Auch andere, dem Fachmann bekannte optische Deaktivierungsmaßnahmen der Halbleiteroberfläche können zu diesem Zweck benutzt werden, so dass an dieser Stelle nicht auf die Details der Herstellung eingegangen zu werden braucht.

Allen Bauformen der aufgezeigten Ausführungsbeispiele ist gemein, dass sich die aktive, das heisst lichtempfindliche Fläche des erfindungsgemäßen Detektors in Richtung der Strahlverschiebung aufgrund der Parallaxe für kürzer werdende Zielobjektabstände verjüngt. Das heisst, die Ausdehnung der aktiven Fläche des Detektors senkrecht zur gemeinsamen Ebene der optischen Achsen von Sendeeinheit und Empfangseinheit nimmt in der oben genannten Richtung ab.

Die erfindungsgemäße Vorrichtung ist nicht auf die in der Beschreibung vorgestellte Ausführungsbeispiele begrenzt.

Explizit sei angemerkt, dass auch eine konvexe Detektorfläche vorstellbar ist. Die genaue Form der Änderung der Detektorfläche mit zunehmendem Abstand von der optischen Achse der Sendeeinrichtung hängt unter Anderem von dem gewünschten Messbereich ab, in dem das erfindungsgemäße Messgerät arbeiten soll. Auch die genaue Geometrie des Gerätes und die optischen Abbildungsverhältnisse im Empfangsast sind hierbei zur Optimierung zu berücksichtigen.

Auch muss die Verjüngung der aktiven Detektorfläche nicht kontinuierlich erfolgen, sondern kann auch diskret, beispielsweise in einzelnen Stufen realisiert sein.

## Patentansprüche

1. Vorrichtung zur optischen Distanzmessung mit einer Sendeeinheit (12) mit einer Lichtquelle (17,18) zur Aussendung modulierter, optischer Strahlung (13,20,22) auf ein Zielobjekt (15) hin, und mit einer zur optischen Achse (38) der Sendeeinheit (12) beabstandeten Empfangseinheit (14) mit zumindest einem optischen Detektor (54) zum Empfang der vom Zielobjekt (15) rücklaufenden optischen Strahlung (16,49,50), sowie mit einer Steuer- und Auswerteeinheit (36) zur Ermittlung der Distanz (48) der Vorrichtung zum Zielobjekt (15), **dadurch gekennzeichnet, dass** sich die aktive, lichtempfindliche Fläche (66,67,68,69) des Detektors (54) der Empfangseinheit (14) in Richtung (61) einer Strahlverschiebung für kleiner werdende Zielobjektabstände (48), die sich aufgrund einer Parallaxe der rücklaufenden Strahlung (16) ergibt, verjüngt.

2. Vorrichtung nach Anspruch 1, **dadurch gekennzeichnet, dass** die lichtempfindliche Fläche (66,67,68,69) des Detektors (54) zumindest so groß ist, dass der Messfleck (58) der rücklaufenden Strahlung (16,49) von einem Zielobjekt (15) mit großem Objektabstand vollständig detektiert wird.

3. Vorrichtung nach Anspruch 1 oder 2, **dadurch gekennzeichnet, dass** die Ausdehnung der lichtempfindlichen Fläche (66,67,68,69) des Detektors (54) in Richtung senkrecht zur optischen Achse (51) der Empfangseinheit (14) zumindest so groß ist, dass der von einem Zielobjekt (15) im Nahbereich rücklaufende Messstrahl (50) zumindest teilweise noch auf die lichtempfindliche Fläche (66,67,68,69) fällt.

4. Vorrichtung nach einem der vorhergehenden Ansprüche, **dadurch gekennzeichnet, dass** die lichtempfindliche Fläche (66,67,68,69) des Detektors (55) eine Symmetrieachse aufweist, die in der gemeinsamen Ebene (56) der optischen Achsen von Sendeeinheit (38) und Empfangseinheit (51) liegt.

5. Vorrichtung nach einem der vorhergehenden Ansprüche, **dadurch gekennzeichnet, dass** die aktive, lichtempfindliche Fläche (66,67,68,69) des Detektors (54) durch teilweise Abdeckung einer größeren, optisch sensitiven Detektorfläche (78) herausgebildet ist.

6. Vorrichtung nach Anspruch 4, **dadurch gekennzeichnet, dass** die aktive, lichtempfindliche Fläche (66,67,68,69) des Detektors (54) durch partielles Aufbringen einer optisch undurchsichtigen Schicht (80) auf die ursprünglich größere, optisch sensitive Detektorfläche (78) herausgebildet ist.

7. Vorrichtung nach einem der vorhergehenden Ansprüche, **dadurch gekennzeichnet, dass** die Lichtquelle (17,18) ein Laser, insbesondere eine Laserdiode (18) ist, die Strahlung im für das menschliche Auge sichtbaren Wellenlängenbereich des Spektrums elektromagnetischer Wellen emittiert.

## Claims

1. Device for optical distance measurement having a transmitting unit (12) with a light source (17, 18) for emitting modulated, optical radiation (13, 20, 22) onto a target object (15), and having a receiving unit (14), spaced apart from the optical axis (38) of the transmitting unit (12), with at least one optical detector (54) for receiving the optical radiation (16, 49, 50) returning from the target object (15), and having a control and evaluation unit (36) for determining the distance (48) of the device from the target object (15), **characterized in that** the active, photosensitive surface (66, 67, 68, 69) of the detector (54) of the receiving unit (14) tapers in the direction (61) of a beam displacement for decreasing target object distances (48) which results from a parallax of the returning variation (16).

2. Device according to Claim 1, **characterized in that** the photosensitive surface (66, 67, 68, 69) of the detector (54) is at least so large that the measurement spot (58) of the returning radiation (16, 49) from a target object (15) with a large object distance is completely detected.

3. Device according to Claim 1 or 2, **characterized in that** the extent of the photosensitive surface (66, 67, 68, 69) of the detector (54) in a direction perpendicular to the optical axis (51) of the receiving unit (14) is at least so large that the measuring beam (50) returning from a target object (15) at close range still falls at least partially onto the photosensitive surface (66, 67, 68, 69).

4. Device according to one of the preceding claims, **characterized in that** the photosensitive surface (66, 67, 68, 69) of the detector (55) has an axis of symmetry which lies in the common plane (56) of the optical axes of the transmitting unit (38) and receiving unit (51).

5. Device according to one of the preceding claims, **characterized in that** the active, photosensitive surface (66, 67, 68, 69) of the detector (54) is formed by partially covering a relatively large, optically sensitive detector surface (78).

6. Device according to Claim 4, **characterized in that** the active, photosensitive surface (66, 67, 68, 69) of the detector (54) is formed by partially applying an optically opaque layer (80) to the originally larger, optically sensitive detector surface (78).

7. Device according to one of the preceding claims, **characterized in that** the light source (17, 18) is a laser, in particular a laser diode (18) which emits radiation in the wavelength region of the spectrum of electromagnetic waves which is visible to the human eye.

## Revendications

1. Dispositif de mesure optique de distance comportant une unité d'émission (12) munie d'une source lumineuse (17, 18) pour émettre un rayonnement optique modulé (13, 20, 22) vers un objet cible (15), et comportant une unité de réception (14) espacée de l'axe optique (38) de l'unité d'émission (12) et munie d'au moins un détecteur optique (54) pour recevoir le rayonnement optique (16, 49, 50) revenant de l'objet cible (15), ainsi qu'une unité de commande et d'évaluation (36) pour déterminer la distance (48) du dispositif à l'objet cible (15), **caractérisé en ce que** la surface photosensible active (66, 67, 68, 69) du détecteur (54) de l'unité de réception (14) se rétrécit dans la direction (61) du décalage du rayonnement pour des séparations d'objets cibles (48) de plus en plus petites résultant de la parallaxe du rayonnement renvoyé (16).

2. Dispositif selon la revendication 1, **caractérisé en ce que** la surface photosensible (66, 67, 68, 69) du détecteur (54) est au moins suffisamment grande pour que la tâche de mesure (58) du rayonnement renvoyé (16, 49) par un objet cible (15) ayant une grande séparation d'objet soit entièrement détectée.

3. Dispositif selon la revendication 1 ou 2, **caractérisé en ce que** l'étendue de la surface photosensible (66, 67, 68, 69) du détecteur (54) dans une direction perpendiculaire à l'axe optique (51) de l'unité de réception (14) est au moins suffisamment grande pour que le rayonnement de mesure (50) renvoyé par un objet cible (15) dans la zone proche soit au moins encore partiellement incident sur la surface photosensible (66, 67, 68, 69).

4. Dispositif selon l'une des revendications précédentes, **caractérisé en ce que** la surface photosensible (66, 67, 68, 69) du détecteur (55) possède un axe de symétrie se situant dans le plan commun (56) des axes optiques de l'unité d'émission (38) et de l'unité de réception (51).

5. Dispositif selon l'une des revendications précédentes, **caractérisé en ce que** la surface photosensible active (66, 67, 68, 69) du détecteur (54) est réalisée par recouvrement partiel d'une surface de détection optiquement sensible (78) plus importante.

6. Dispositif selon la revendication 4, **caractérisé en ce que** la surface photosensible active (66, 67, 68, 69) du détecteur (54) est réalisée par mise en place partielle d'une couche optiquement opaque (80) sur la surface de détection optiquement sensible (78) initialement plus grande.

7. Dispositif selon l'une des revendications précédentes, **caractérisé en ce que** la source lumineuse (17, 18) est un laser, et plus particulièrement, une diode laser (18), qui émet un rayonnement se situant dans le domaine des longueurs d'onde visibles par l'oeil humain du spectre d'ondes électromagnétiques.
